(19) Europäisches Patentamt
European Patent Office
Office européen des brevets

(11) Publication number: **0 373 671 A2**

(12) # EUROPEAN PATENT APPLICATION

(21) Application number: 89123256.3

(22) Date of filing: 15.12.89

(51) Int. Cl.5: C08G 18/08, C08G 18/34, C08G 18/66, C08G 18/72, C09D 175/04

(30) Priority: 15.12.88 US 285536

(43) Date of publication of application: 20.06.90 Bulletin 90/25

(84) Designated Contracting States: AT BE CH DE ES FR GB GR IT LI LU NL SE

(71) Applicant: SANNCOR INDUSTRIES, INC.
300 Whitney Street
Leominster Massachusetts 01453(US)

(72) Inventor: Crall-Fallon, Karen
61 Falulah Street
Fitchburg Massachusetts(US)
Inventor: Bender, Howard S.
1169 Elm Street
Leominster Massachusetts(US)

(74) Representative: Endlich, Fritz, Dipl.-Phys.
Postfach 1326 Blumenstrasse 8
D-8034 Germering(DE)

(54) **Waterborne polyurethane dispersions.**

(57) Polyurethane dispersions are described that are resistant to water and alcohol, exhibit a long pot life, and produce a hard, high gloss finish without the need for a curing step, and which are suitable as coatings and/or adhesives for wood, concrete, natural and synthetic fibers, plastic films etc. Such a composition comprises a polymerized blend of a first component consisting essentially of a mixture solely of aromatic diisocyanates or of one or more aromatic diisocyanates with one or more aliphatic diisocyanates; a second component consisting essentially of one or more polyhydroxyl compounds; and a polyhydroxyl compound containing a carboxyl moiety.

EP 0 373 671 A2

# Waterborne Polyurethane Dispersions

## I> Background of the Invention

### A. Field of the Invention

This invention relates to aromatic waterborne polyurethane dispersions, their preparation, and the use thereof. More particularly, this invention relates to polyurethane dispersions prepared from a mixture of aromatic or mixed aromatic and aliphatic diisocyanates, polymerized by reaction with suitable polyhydroxyl compounds (polyol).

### B. Prior Art

Although numerous polymer-based coatings and adhesives are available on the market, products that combine the advantages of resistance to water and alcohol, high gloss and hard finish typically require a cross-linking step as part of the curing process. The necessity of cross-linking is undesirable from economic, convenience and environmental perspectives. Typically, the cross-linking agent must be added to the coating as a separate component, at the time and in the proportions of the intended usage; the consumer must store both components in separate containers. Alternatively, some systems contains the cross-linking agent as part of the coating product; however, these systems require heat to promote the cross-linkages, rendering the products unsuitable for applications (e.g. coating of wooden surfaces) that cannot tolerate the necessary temperatures, or where the surface is too large to be heated conveniently. Some such products also exhibit vulnerability to atmospheric moisture, which renders storage more difficult.

Moreover, the cross-linking agents currently in use, whether as separate components or contained in the coating mixture, display certain human and/or environmental toxicity characteristics. As examples, melamine formaldehyde and aziridine, both commonly used agents (the former within the coating mixture and the latter as a separate additive), release harmful vapors and can produce adverse skin reactions on contact.

The prior art includes dispersions of polyurethanes produced by combining polyisocyanates with organic compounds containing multiple hydroxyl groups. Although these may be suitable for coatings in some circumstances, all exhibit one or more of the disadvantages described above.

## II. Description of the Invention

### A. Objects of the Invention

Accordingly, it is an object of the present invention to provide polyurethane dispersions that are resistant to water and alcohol, exhibit a long pot life, and produce a hard, high gloss finish without the need for a curing step, and which are suitable as coatings and/or adhesives for wood, concrete, natural and synthetic fibers, plastic films and other natural or man-made substrates.

It is another object of the invention to accomplish the foregoing without the need for a cross-linking step or the need to mix two or more separate components.

It is a further object of the invention to accomplish the foregoing without producing harmful physical or environmental consequences.

### B. Brief Summary of the Invention

According to the present invention, these objects may be achieved through the use of an advantageous mixture of two or more diisocyanates, at least one of which contains an aromatic functionality, polymerized with a suitable polyol mixture and dispersed in water.

Ordinarily, isocyanate compounds employed as polymer components contain two or more isocyanate moieties per molecule. Likewise, a useful polyol component consists of an organic substrate containing two or more hydroxyl groups. Under appropriate conditions, the isocyanate and hydroxyl functionalities react with one another such that repeating urethane linkages are produced. Small chains consisting of several such linkages are referred to as "prepolymers". Excess diisocyanate is generally utilized to provide free isocyanate terminals on the ends of the prepolymer molecules.

More specifically, this initial reaction yields a linear prepolymer, which contains the characteristic polyurethane structure but is not of sufficiently high molecular weight to exhibit the desired physical properties. Substances known as extenders are, therefore, typically employed to increase the molecular weight of the prepolymer units. These react with the free isocyanate groups to link prepolymer units into longer linear structures.

The polyol mixture can include a variety of polyhydroxyl compounds. At least one of polyol species should contain a highly polar or ionic

group to facilitate water dispersibility. The water-based nature of the product facilitates a single-component system, permits fast setting (which takes place as the water evaporates), and insures low viscosity. The latter feature, generally difficult to obtain in products utilizing polymers of high molecular weight, promotes ease of manufacture and use.

Upon application of the water-dispersed polymer compound to a substrate, the water begins to evaporate, ultimately leaving only the polymer bound to the substrate. Loss of the dispersed water results in tight packing of the polymer molecules, which confers water resistance and the other physical properties associated with the invention.

C. Detailed Description of the Invention

In the present invention, preferred aromatic diisocyanates include diphenylmethane diisocyanate (MDI, also classified as methylene bis-phenylisocyanate) and toluene diisocyanate (TDI). A preferred aliphatic diisocyanate is 1,1'-methylene bis(4-isocyanatocyclohexane) (marketed under the trade name DESMODUR-W). As described in the Examples, these compounds can be combined in various proportions to obtain the desired physical properties. Other potentially useful diisocyanates include 2,4-toluene diisocyanate; 2,6-toluene diisocyanate; hexamethylene 1,6-diisocyanate; tetramethylene-1,4-diisocyanate; cyclohexane-1,4-diisocyanate; naphthalene-1,5-diisocyanate; diphenylmethane-4,4'- diisocyanate; xylene diisocyanate; hexahydro xylylene diisocyanate; dicyclohexylmethane-4,4'-diisocyanate; 1,4-benzene diisocyanate; 3,3'-dimethoxy-4,4'-diphenyl diisocyanate; m-phenylene diisocyanate; isophorone diisocyanate; polymethylene polyphenyl isocyanate; 4-isocyantocyclohexyl-4'-isocyanatophenyl methane; p-isocyanatomethyl phenyl isocyanate; 1,4-bis-(isocyanatophenyl) cyclohexane; o-tetramethylxylene diisocyanate; p-tetramethylxylene diisocyanate; 2,2,4-trimethylhexamethylene diisocyanate; and 2,3,4-trimethylhexamethylene diisocyanate.

Highly preferred polyols include 1,4 butanediol adipate polyester; ethylene glycol adipate polyester or a mixture of 1,6-hexanediol, neopentyl glycol adipate; various polyether diols such as [oxy (methyl-1,2-ethanediyl)], alpha-hydro omega-hydroxy; polycarbonate polyols such as hydroxyterminated polycarbonate, 1,6-hexanediol; polylactone polyols such as 2-oxypanone; ethylene glycol; 1,3-butylene glycol; 1,6-hexanediol; propylene glycol; and 1,4-butanediol.

As noted previously, an additional polyol species containing a polar or ionic moiety should also be introduced into the polymer to induce dispersion in water. The organic acid (carboxyl) functionality has been found to serve this purpose. A preferred polyol for this function is dimethylolpropionic acid (DMPA), which contains the carboxyl group. However, useful results may be obtained with a wide variety of compounds having the general formula:

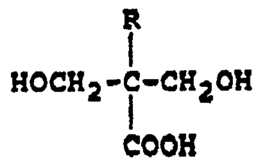

where R is hydrogen or a straight or branched chain alkyl group containing from 1 to 8 carbon atoms.

An amine neutralizer is employed to form a salt with the carboxylic acid and thereby maintain a basic pH. Suitable amine neutralizers include dimethylethanolamine (DMEA), triethylamine, N-methylmorpholine, triethanolamine and triethylamine dimethanolamine.

A preferred extender is hydrazine, but advantageous results can also be obtained with ethylenediamine and polyoxyalkyleneamine (marketed under the tradename Jeffamine D230). Other well-known extenders which would be expected to produce similar results include diethylene triamine; triethylene tetramine; propylene diamine; butylene diamine; hexamethylene diamine; cyclohexylene diamine; piperazine; 2-methyl piperazine; phenylene diamine; tolylene diamine; xylene diamine; 3,3'-dinitrobenzidene; 4,4'-methylene bis(2-chloroaniline); 3,3'-dichloro-4,4'-biphenyl diamine; 2,6-diaminopyridine; 4,4'-diamino diphenylmethane; adducts of diethylene triamine with acrylate or its hydrolyzed products; substituted hydrazines such as, for example, dimethyl hydrazine; 1,6-hexamethylene-bis-hydrazine; carbodihydrazide; hydrazides or dicarboxylic acids and sulfonic acids such as adipic acid mono- or dihydrazide, tartaric acid dihydrazide; 1,3-phenylene disulfonic acid dihydrazide; omega-amino-caproic acid dihydrazide; hydrazides made by reacting lactones with hydrazine such as gamma-hydroxylbutyric hydrazide; bis-semi-carbazide; bis-hydrazide; and carbonic esters of glycols such as any of the glycols mentioned above.

In addition to the foregoing components, it is useful to add a co-solvent such as 1-methyl-2-pyrrolidinone to facilitate reaction of the components. Similar results can be obtained with other suitable solvents such as acetone, methylethylketone, butyrolactone, dimethylformamide, ethylene carbonate, propylene carbonate, ethyl acetate, ethylene glycol acetate, propylene glycol acetate, toluene or xylene.

The various formulations described herein may be employed as coatings or adhesives. Owing to the waterborne nature of the materials, there is no curing step, and additionally coatings may be applied after a drying time of approximately one-half hour. The low viscosity permits ease of use with various application means, such as brushes, rollers, or straight pouring. After drying, all of the materials exhibit tough, durable high-gloss finishes that resist abrasion and stress fractures, and are impervious to alcohol staining. All formulations may be combined with pigments or additives to modify the finish, such as surfactants, thickeners flow control agents and/or defoamers. Furthermore, the material may be combined in bulk with other water-based polymers, such as acrylic emulsions, to reduce overall cost.

In contrast with solvent-based systems, the formulations in each of the following Examples have low associated volatile organic compound (VOC) content ratings, indicating minimal adverse environmental effect. This is due to the presence of water as the primary volatile component.

D. Examples

1) Example 1

A reaction vessel equipped with a condenser, nitrogen purge and stirring blade is charged with 8.41 and 5.86 parts by weight of MDI and TDI, respectively. Agitation is then begun. To this mixture is added 11.33 parts of 1-methyl-2-pyrrolidinone. Through an additional funnel, 17.08 parts of 1,4-butanediol adipate polyester (with molecular weight of 860 daltons) and 2.65 parts of DMPA are added.

The ensuing reaction is exothermic, and the rate of addition must be adjusted so as to keep the temperature under 180 degress Fahrenheit. 2.65 parts of DMPA are added in a similar manner. The mixture is then heated to maintain a reaction temperature between 130 and 180 degrees Fahrenheit for approximately one hour, or until all of the isocyanate reactants have been incorporated into prepolymer chains.

The mixture is subsequently cooled to a temperature between 80 and 120 degrees Fahrenheit, and added to a separate mixture of 50.9 parts water, 2.03 parts DMEA, and 1.72 parts hydrazine; during this extension and dispersion step, which is also exothermic, the mixture should be cooled so as to maintain a temperature between 60 and 100 degrees Fahrenheit. Agitation may be discontinued after approximately 10 minutes, and the mixture allowed to cool to room temperature.

The resulting composition exhibits a non-volatile component of approximately 35% by weight, a viscosity of approximately 1000 cps, and pH of 8.90.

A water-spotting test was performed on this formulation to determine resistance to water staining. After brushing several coats of the material onto wood, a drying period of 24 hours was allowed. Several drops of water were then placed onto the surface and a glass tumbler positioned thereover, so as to form a water ring around the edge of said tumbler. After an additional 24 hours, the tumbler was removed. No water spotting was observed.

Gloss levels were measured by shining light on the dried coating at three different angles, and measuring the percentage of incident light reflected. The percent measured reflectance was 49.5, 91.5 and 91.3, corresponding to incident light directed at 20, 60 and 85 degrees from the horizontal, respectively.

For laboratory convenience, the remaining Examples were prepared to exhibit somewhat lower or higher viscosity than that in Example 1 through the use of additional amounts of water. For commercial purposes, viscosity may be varied according to the particular usage intended for the product. For example, a material suitable for application with a brush requires a higher viscosity (to eliminate brush marks) than one which will be sprayed onto the substrate.

2) Example 2

Utilizing the reaction conditions described in Example 1, another highly preferred embodiment yielding similar physical characteristics consists of 14.15 parts butanediol adipate; 0.50 parts ethylene glycol; 2.99 parts DMPA; 9.18 parts MDI; 6.36 parts TDI, 11.06 parts 1-methyl-2-pyrrolidinone; 1.34 parts hydrazine; 2.28 parts DMEA; and 50.77 parts water. To this composition is added 1.36 parts of a non-ionic surfactant such as that marketed under the trade name Igepal CO-987.

3) Example 3

Utilizing the reaction conditions described in Example 1, an aliphatic diisocyanate may be introduced along with the MDI and TDI. The resulting compound exhibits excellent gloss and spot resistance. Viscosity may be varied over a wide range,

depending on the proportions chosen. One useful formulation consists of 14.73 parts 1,4-butanediol adipate polyester; 5.97 parts MDI; 4.17 parts TDI; 2.24 parts DESMODUR-W; 2.29 parts DMPA; 9.80 parts 1-methyl-2-pyrrolidinone; 0.78 parts hydrazine; 1.75 parts DMEA; and 58.28 parts water.

4) Example 4

Utilizing the reaction conditions described in Example 1, the equivalent ratio of MDI to TDI (which was set at equal levels in Example 1) may be varied significantly. To obtain an 80/20 ratio, 10.88 parts of MDI and 1.9 parts of TDI may be substituted. The other reactant proportions were adjusted as follows: 14.23 parts 1,4-butanediol adipate polyester; 2.21 parts DMPA; 9.74 parts 1-methyl-2-pyrrolidinone; 0.79 parts hydrazine; 2.53 parts DMEA; and 57.72 parts water.

Viscosity is lowered to 100 cps in this formulation, and volatility increases. Gloss suffers only slightly, the pH rises to 9.37.

Similarly, the ratio may be set at 20/80 by substituting 2.95 parts of MDI and 8.22 parts of TDI. To obtain this ratio, the other reactant proportions were adjusted as follows: 15.41 parts 1,4-butanediol adipate polyester; 2.39 parts DMPA; 9.65 parts 1-methyl-2-pyrrolidinone; 1.04 parts hydrazine; 1.83 parts DMEA; and 58.52 parts water.

The viscosity of this compound is 25 cps, and pH is lowered only slightly.

5) Example 5

Utilizing the reaction conditions described in Example 1, the equivalent ratio of isocyanate to polyol may be varied from the figure of 1.65 associated with Example 1. To increase the isocyanate/polyol ratio to 2.0, the following adjustments were made to the remaining reactants: 13.57 parts 1,4-butanediol adipate polyester; 7.86 parts MDI; 5.48 parts TDI; 2.11 parts DMPA; 9.67 parts 1-methyl-2-pyrrolidinone; 0.98 parts hydrazine; 1.61 parts DMEA; and 58.71 parts water.

The viscosity of this mixture is 50 cps and volatility is higher than that associated with Example 1. Water spotting remains undetectible after 24 hours.

To decrease the isocyanate/polyol ratio to 1.3, the following adjustments were made to the remaining reactants: 22.92 parts 1,4-butanediol adipate polyester; 8.66 parts MDI; 5.86 parts TDI; 3.62 parts DMPA; 13.71 parts 1-methyl-2-pyrrolidinone; 0.60 parts hydrazine; 2.72 parts DMEA; and 41.73 parts water.

6) Example 6

The equivalent ratio of polyol to DMPA in Example 1 is equal. This ratio may be varied from .67 to 1.5 utilizing reaction conditions described in Example 1. In both cases, viscosity drops to 50 cps, gloss remains approximately equivalent.

To decrease the ratio of polyol to DMPA to .67, the following adjustments were made to the reactants: 17.88 parts 1,4-butanediol adipate polyester; 10.68 parts MDI; 7.45 parts TDI; 4.16 parts DMPA; 13.39 parts 1-methyl-2-pyrrolidinone; 1.55 parts hydrazine; 3.19 parts DMEA; and 41.71 parts water.

To increase the ratio of polyol to DMPA to 1.5, the following adjustments were made to the reactants: 16.38 parts 1,4-butanediol adipate polyester; 6.52 parts MDI; 7.45 parts TDI; 1.70 parts DMPA; 9.71 parts 1-methyl-2-pyrrolidinone; 0.86 parts hydrazine; 1.30 parts DMEA; and 58.99 parts water.

7) Example 7

The molecular weight of the polyol may also be varied. Increasing the weight of 1,4-butanediol adipate polyester to 1500 while maintaining the reactive conditions of Example 1 results in decreased viscosity (75 cps) while maintaining excellent spot resistance. Volatility, however, is increased.

Decreasing the molecular weight to 500 lowers viscosity even further, to 50 cpa. Volatility also increases, although to a lesser degree.

The following changes in reactants supported a decrease in the molecular weight of the polyol to approximately 500: 11.36 parts 1,4-butanediol adipate polyester (a consequence of lower molecular weight); 8.67 parts MDI; 6.04 parts TDI; 2.81 parts DMPA; 9.63 parts 1-methyl-2-pyrrolidinone; 1.12 parts hydrazine; 2.15 parts DMEA; and 58.22 parts water.

The following changes in reactants supported an increase in the molecular weight of the polyol to approximately 1500: 18.86 parts 1,4-butanediol adipate polyester (a consequence of higher molecular weight); 5.20 parts MDI; 6.04 parts TDI; 1.69 parts DMPA; 9.63 parts 1-methyl-2-pyrrolidinone; 1.12 parts hydrazine; 2.15 parts DMEA; and 58.91 parts water.

## Claims

1. A composition comprising a polymerized blend of

(i) a first component consisting essentially of a mixture solely of aromatic diisocyanates or of one or more aromatic diisocyanates with one or

more aliphatic diisocyanates;

(ii) a second component consisting essentially of one or more polyhydroxyl compounds; and

(iii) a polyhydroxyl compound containing a carboxyl moiety.

2. A composition as in claim 1, wherein the second component consists of one or more of

(i) a polyester polyol or

(ii) a polyether polyol or

(iii) a polycarbonate polyol or

(iv) a polylactone polyol.

3. A composition as in claim 1 wherein the first component comprises from about 50% to about 70% by weight of the composition.

4. A composition as in claim 1 wherein the first component consists of diphenylmethane diisocyanate and toluene diisocyanate.

5. A composition as in claim 1 wherein the first component consists of diphenylmethane diisocyanate and 1, 1′-methylene bis(4-isocyanatocyclohexane).

6. A composition as in claim 1 wherein the first component consists of diphenylmethane diisocyanate, toluene diisocyanate and 1, 1′-methylene bis(4-isocyanatocyclohexane).

7. A composition as in claim 1 wherein the second component is 1,4 butanediol adipate polyester.

8. A composition as in claim 1 wherein the second component is a mixture of 1,6-hexanediol and neopentyl glycol adipate.

9. A composition as in claim 1 wherein the second component is ethylene glycol adipate polyester.

10. A composition as in claim 1 wherein the second component is a mixture of butanediol adipate and ethylene glycol.

11. A composition as in claim 1 wherein the second component is [oxy (methyl-1,2-ethanediyl)], alpha-hydro omega-hydroxy.

12. A composition as in claim 1 wherein the second component is hydroxyterminated polycarbonate, 1,6 hexanediol.

13. A composition as in claim 1 wherein the second component is 2-oxypanone.

14. A composition as in claim 1 wherein the third component is dimethylolpropionic acid.

15. A composition as in claim 1 further comprising an extender.

16. A composition as in claim 15 wherein the extender is hydrazine, ethylenediamine or polyoxyalkyleneamine.

17. A composition as in claim 1 further comprising an amine neutralizer.

18. A composition as in claim 17 wherein the amine neutralizer id dimethylethanolamine.

19. A composition as in claim 17 wherein the amine neutralizer is triethylamine or N-methylmorpholine.

20. A composition as in claim 1 further comprising a co-solvent.

21. A composition as in claim 20 wherein the co-solvent is 1-methyl-2-pyrrolidinone.

22. A composition as in claim 1 further comprising a non-ionic surfactant.

23. A process of coating a substrate comprising

(i) Applying the composition of claim 1,15, 17,20 or 22 to a substrate; and

(ii) Exposing said substrate to air for a sufficient time to allow the volatile components to evaporate and thereby form a finished coating.

24. A process of bonding two substrates together comprising

(i) Depositing on a surface of one substrate the composition of claim 1, 15, 17, 20 or 22;

(ii) Depositing on a surface of a second substrate the composition of claim 1, 15, 17, 20 or 22; and

(iii) Bringing said surface of said first substrate into contact with said surface of said second substrate and applying pressure so as to bring said surfaces into intimate contact.